# EUROPÄISCHE PATENTSCHRIFT

(11) **EP 0 872 974 B1**
(45) Veröffentlichungstag und Bekanntmachung des Hinweises auf die Patenterteilung: **23.02.2005**
(21) Anmeldenummer: 98100957.4
(22) Anmeldetag: 21.01.1998
(51) Int. Cl.: H04L 1/24

(54) **Bitfehlerstruktur-Erfassungsschaltung**
Bit error pattern detection circuit
Dispositif de détection de motif d'erreur de bit

(30) Priorität: 16.04.1997 DE 19715829
(43) Veröffentlichungstag der Anmeldung: 21.10.1998
(73) Patentinhaber: Deutsche Telekom AG, 53113 Bonn (DE)
(72) Erfinder: Herzog, Werner, Dipl.-Ing. (FH), 14165 Berlin (DE)

(56) Entgegenhaltungen:
- DE-A- 2 809 684
- US-A- 5 136 591
- ERNST RUSS: "Erfassung von Fehlerstrukturen bei der übertragung digitaler signale" 1974 INTERNATIONAL ZURICH SEMINAR ON DIGITAL COMMUNICATIONS, ZURICH, SWITZERLAND, 12. - 15. März 1974, XP000939247
- STAMBERGER A: "STOERUNGSUNTERSUCHUNGEN AN DIGITALEN NACHRICHTENVERBINDUNGEN" ELEKTRONIK,DE,FRANZIS VERLAG GMBH. MUNCHEN, Bd. 29, Nr. 24, 1. November 1980 (1980-11-01), Seiten 95-97, XP002051990 ISSN: 0013-5658
- HERZOG W: "Ein Bitfehlerstruktur-Messgerät für den Betrieb" TELEKOM PRAXIS,DE,SCHIELE UND SCHOEN, BERLIN, Bd. 74, Nr. 11, November 1997 (1997-11), Seiten 22-28, XP000884873 ISSN: 0015-0118

## Beschreibung

Die Erfindung betrifft eine Bitfehlerstruktur-Erfassungsschaltung zur Aufzeichnung des bitgenauen zeitlichen Auftretens von Übertragungsfehlern in einem binären Testsignal, insbesondere zur Aufzeichnung einer Bitfehler-Signalfolge, die anhand des Testsignals und eines gleichartigen Referenz-Signals mit einer Vergleicherschaltung erzeugt worden ist.

Es ist bekannt, daß Bitfehlermeßgeräte als Meßsignal quasizufallsverteilte Binärsignalfolgen (Pseudo Random Binary Sequence, PRBS) über eine Meßstrecke übertragen, die empfangsseitig mit einer identisch erzeugten PRBS synchronisiert und bitweise verglichen werden. Aus diesem Vergleich ergibt sich eine weitere Binärsignalfolge, bei der der eine Signalzustand Übereinstimmung, und der andere Abweichung bedeutet. Diese als Bitfehlerstruktur bezeichnete Binärsignalfolge stellt das genaue Abbild des Störverhaltens des Übertragungsweges dar. Im allgemeinen beschränkt man sich jedoch darauf, die binären Daten am Vergleicherausgang, die Abweichung (Bitfehler) signalisieren, zu summieren und daraus die sogenannte Bitfehlerrate oder Bitfehlerquote zu bestimmen. Damit gehen im Gegensatz zu der Bitfehlerstruktur äußerst wichtige Informationen über die Lage der Bitfehler innerhalb der Binärsignalfolge verloren. Bei der Erfassung der Bitfehlerstruktur wird hingegen jeder Bitfehler und der Zeitpunkt seines Auftretens registriert. Aufgrund der gewaltigen Datenfülle ist es jedoch unmöglich, die Binärsignalfolge des Vergleichers vollständig aufzuzeichnen. Bei der Erfassung der Bitfehlerstruktur besteht das Hauptproblem deshalb darin, ihre Redundanz so zu mindern, daß eine Dauerregistrierung ohne Datenverlust möglich ist.

Es ist weiterhin bekannt, daß das bisher angewandte Erfassungsverfahren (Jahresbericht 1981 des Forschungsinstituts der DBP beim FTZ, Seite 29), das für Übertragungsgeschwindigkeiten bis 140 Mbit/s konzipiert wurde, sich darauf beschränkt, Teilstücke der die Bitfehlerstruktur repräsentierenden Binärsignalfolge aufzuzeichenen, nämlich nur diejenigen, die Bitfehler enthalten. Es wird jedoch, um die Bitfehler zu bestimmen, nicht jedes Bit der Binärsignalfolge einzeln geprüft, sondern es werden Abschnitte von 32 Bit Länge gebildet, die auf das Vorhandensein von Bitfehlern untersucht werden. Dadurch wird die Zeit, die für die Prüfung und die Reaktion auf das Ergebnis zur Verfügung steht, um den Faktor 32 verlängert. Dementsprechend läßt sich mit mäßig schnellen Bauelementen eine hohe Verarbeitungsgeschwindigkeit erzielen.

Weitere Erfassungsverfahren sind aus US-A-5 136 591 und aus E. Russ, "Erfassung von Fehlerstrukturen bei der Übertragung digitaler Signale", International Zwich Seminar on Digital Communications, Zürich, Schweiz, 12.-15. 3, 1974, bekannt.

Das geprüfte Teilstück wird dann abgespeichert, wenn es einen oder mehrere Bitfehler enthält. Andernfalls, das heißt bei einem fehlerfreien Teilstück, wird es ignoriert. Um die Lage der gespeicherten Teilstücke im Datenstrom bestimmen zu können, wird mit jedem Teilstück der aktuelle Stand eines Taktzählers abgespeichert, der vom Meßbeginn an fortlaufend den Datentakt zählt.

Zusätzlich zu den Teilstücken der Bitfehlerstruktur werden Ausfallsignale erfaßt, die den Ausfall der Meßstrecke durch AIS/Dauer-0 (Alarm Indication Signal) und Synchronverluste (Slip) anzeigen. All diese Daten werden in einem binären blockorientierten Format nach einer Pufferung zur Geschwindigkeitsanpassung auf einem Datenträger abgespeichert. Erst nach Abschluß der Messung kann hieraus off-line mit Rechnerunterstützung die Bitfehlerstruktur in Form einer Zahlenfolge dargestellt werden. Hierzu bedient man sich der beiden Größen "Fehlerlänge" und "Fehlerabstand". Fehlerlänge bedeutet in diesem Zusammenhang die Anzahl der unmittelbar aufeinanderfolgenden falsch übertragenen Bits, während der Fehlerabstand die Anzahl der unmittelbar aufeinanderfolgenden fehlerfrei übertragenen Bits darstellt. Mit Hilfe dieser Definitionen läßt sich die Bitfehlerstruktur als Folge der Zahlenwerte für die Fehlerlängen (F) und Fehlerabstände (G) beschreiben. Diese Fehlerlänge/Fehlerabstandsfolge wird im folgenden kurz als F/G-Folge bezeichnet. Diese F/G-Folge stellt bereits ein aussagekräftiges, sofort verwertbares Meßergebnis dar. Darüber hinaus bildet sie die Basis für eine Reihe weiterer Untersuchungen, die auf spezielle Auswerteziele gerichtet sind.

Von Nachteil ist, daß die Umcodierung der Bitfehler-Signalfolge in ein kompliziertes Zwischenformat einen erheblichen gerätetechnischen Aufwand erfordert. Entsprechend umfangreich ist das Erfassungsgerät. Da die binären Daten dieses Aufzeichnungsformats nicht ohne weiteres lesbar sind, können sie lediglich in einer unbearbeiteten Form als Punkte-Matrix während der laufenden Messung dargestellt werden. Sie sind damit für die Überwachung der Messung nur bedingt tauglich, da deren Deutung eine detaillierte Kenntnis des Blockformats voraussetzt. Für länger andauernde Messungen, bei denen man auf die Hilfe außenstehender Bedienkräfte angewiesen ist, ergibt sich hieraus ein höherer Unterweisungsaufwand.

Um zu verhindern, daß durch Fehler im Meßaufbau möglicherweise das Ziel der Messung verfehlt wird, müssen die ersten Meßergebnisse auf ihre Verwertbarkeit überprüft werden, bevor die Dauerregistrierung beginnt. Hierzu dient ein sogenanntes Quick-Look-Gerät, mit dem off-line die Ergebnisse einer kurzen Probemessung untersucht werden müssen.

Aufgrund der obengenannten 32-Bit-Unterteilung der Bitfehler-Signalfolge ergibt sich der Nachteil, daß die Ausfallsignale nicht bitgenau, sondern nur mit eingeschränkter Genauigkeit erfaßt werden. Desweiteren werden die Meßergebnisse nicht direkt auf eine Diskette gespeichert, sondern zunächst auf einem Zwischendatenträger abgelegt. Als Zwischendatenträger werden nicht flüchtige Halbleiterspeicher verwendet. Erst nach Abschluß der Messung ist es möglich, die Meßdaten von diesem Datenträger zu lesen, sie aus dem Blockformat in die F/G-Folge zu überführen und auf Diskette zu speichern. Hierfür ist jedoch ein zusätzliches Lesegerät mit Software für die Umcodierung erforderlich.

Die Aufgabe der vorliegenden Erfindung besteht deshalb darin, den gerätetechnischen Aufwand für die Bitfehlerstruktur-Erfassung zu verringern und sofort lesbare Ergebnisse während der laufenden Messung bereit zu stellen.

Diese Aufgabe wird mit einer Bitfehlerstruktur-Erfassungsschaltung gelöst, die die Merkmale des Anspruchs 1 aufweist. Aus der Bitfehler-Signalfolge der Vergleichervorrichtung wird durch alternierendes Zählen in einer Zählvorrichtung ummittelbar aufeinanderfolgender Bits desselben Signalzustands direkt die F/G-Folge erzeugt, indem durch jeden Signalwechsel am Vergleicherausgang von einer Impulserzeugungsvorrichtung ein Impuls von der Dauer einer Taktperiode gebildet wird, der die Bitzählung in der Zählvorrichtung für das gegenwärtige Element der F/G-Folge beendet. Der Impuls veranlaßt desweiteren, den Zählerstand in eine Puffervorrichtung zu laden, den Zähler dann zu löschen und das erste Bit des nachfolgenden Elements zu zählen, wobei die letzten Vorgänge dadurch realisiert werden, daß eine "1" in die Zählvorrichtung geladen wird.

Die auf diese Weise redundanzgeminderten Meßdaten werden dann nach Durchlaufen der Puffervorrichtung, die im wesentlichen der Geschwindigkeitsanpassung dient, von einer Auswertevorrichtung verarbeitet und in unmittelbar lesbarer Form für die fortlaufende Darstellung und Speicherung vorzugsweise zu einem PC übertragen.

Vorteilhaft ist es, bei starker, andauernder Bitfehlerhäufung, vorübergehend von der Bitfehlerstrukturerfassung auf eine Bitfehlerratenmessung umzuschalten, um zu verhindern, daß die Puffervorrichtung überläuft. Damit läßt sich auf jeden Fall die Dauerregistrierung sicherstellen.

Der Vorteil dieser Bitfehlerstruktur-Erfassungsschaltung liegt darin, daß die direkte Erzeugung der F/G-Folge einfach und mit vergleichsweise geringen Mitteln zu realisieren ist. Da die Bitfehlerstruktur nicht nur in Teilstücken, sondern vollständig erfaßt wird, ist der Taktzähler, der bei dem bekannten Verfahren zur Adressierung der erfaßten Teilstücke dient, nicht erforderlich. Darüber hinaus werden die Ausfallsignale durch den Wegfall der 32-Bit-Unterteilung bitgenau erfaßt.

Im übrigen erlaubt der geringe Umfang der Schaltung, die Bitfehlerstruktur-Erfassung in das Empfangsteil eines eigenentwickelten Datenmeßgeräts zu integrieren, wo sie nur zwei Kartenplätze im Europaformat belegt. In der Meßpraxis bedeutet dies eine wesentliche Erleichterung.

Zur Darstellung und Speicherung der Meßdaten erlaubt die Bitfehlerstruktur-Erfassungsschaltung über entsprechende Schnittstellen den Anschluß eines mit MS-DOS ausgestatteten PCs am Meßort. Die nötige Software läßt sich problemlos installieren und wieder löschen. Damit bedeutet der PC keinen zusätzlichen Geräteaufwand. Darüber hinaus lassen sich die Meßergebnisse in einer übersichtlichen, lesbaren Form on-line darstellen, so daß -ohne besondere Fachkenntnis und langwierige Unterweisung der Bedienkräfte- die fortlaufende Überwachung der Messung möglich ist. Dadurch wird ein weiteres Gerät entbehrlich, das bislang für die Off-Line-Erstauswertung der Meßergebnisse am Meßort eingesetzt wurde (Quick-Look-Gerät). Auch die Möglichkeit, die Meßerergebnisse auf einen so gebräuchlichen Datenträger wie die 3,5-Zoll-PC-Diskette aufzeichnen zu können, vereinfacht die Weiterverarbeitung der Meßergebnisse.

Weitere vorteilhafte Ausgestaltungen der Erfindung ergeben sich aus den Unteransprüchen.

Die Erfindung wird nun anhand eines Ausführungsbeispiels mit Bezug auf die Zeichungen näher erläutert. Dabei zeigen:
- Figur 1: ein Blockdiagramm einer Bitfehlerstrukbttur-Erfassungsschaltung, und
- Figur 2: mehrere Zeitdiagramme zur Erläuterung des Ablaufs der Bitfehlerstruktur-Erfassung.

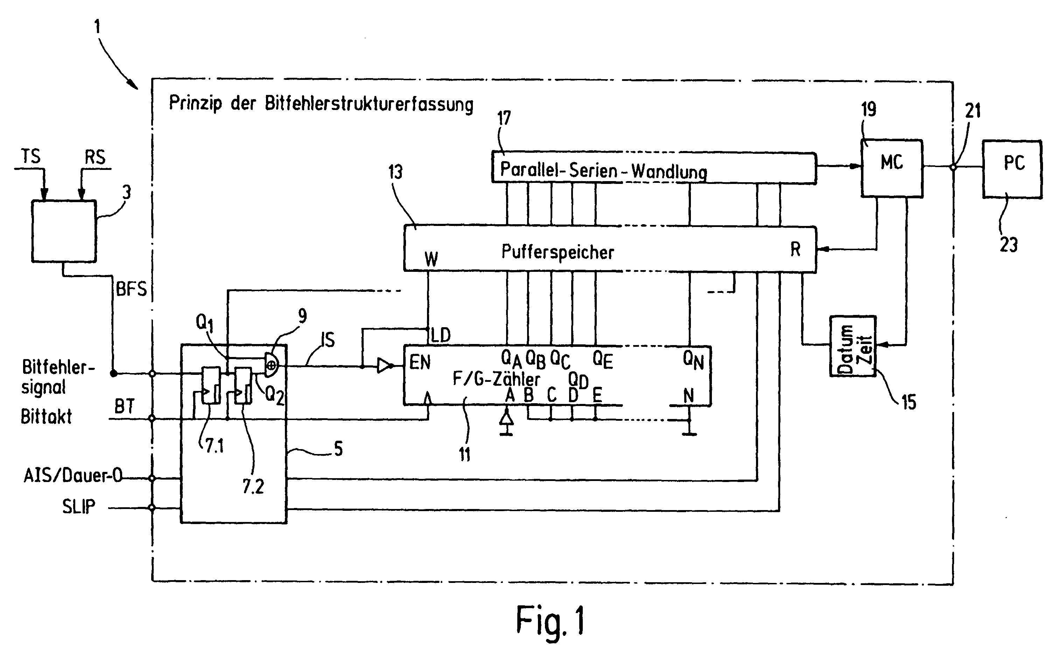

In Figur 1 ist eine Bitfehlerstruktur-Erfassungsschaltung 1 dargestellt, die zur Erfassung der Bitfehlerstruktur eines binären Testsignals ausgelegt ist. Sie erhält das Bitfehlersignal von einer Vergleicherschaltung 3, der ein Testsignal TS und ein Referenzsignal RS zugeführt werden. Bei dem Testsignal handelt es sich um eine quasizufallsverteilte Binärsignalfolge, die die Meßstrecke durchlaufen hat. Bei dem Referenzsignal handelt es sich um eine identisch erzeugte Binärsignalfolge, die mit dem Testsignal synchronisiert ist. Der Vergleicher vergleicht die beiden Binärsignalfolgen bitweise und erzeugt eine weitere Binärsignalfolge BFS, die am Ausgang des Vergleichers anliegt. Der Vergleich der beiden Eingangssignale TS, RS erfolgt derart, daß bei Signalübereinstimmung das Ausgangssignal einen ersten Signalzustand und bei Nicht-Übereinstimmung das Ausgangssignal einen zweiten Signalzustand einnimmt. Als Verknüpfungsglied eignet sich eine Exklusiv-Oder-Schaltung.

Die Bitfehlerstruktur-Erfassungsschaltung 1 umfaßt desweiteren eine Impulserzeugungsschaltung 5, der neben der Bitfehlerfolge BFS der Bittakt BT zugeführt wird. Die Impulserzeugungsschaltung 5 selbst weist zwei Flip-Flops 7.1 und 7.2 auf, sowie ein Exklusiv-Oder-Gatter 9. Die beiden Flip-Flops 7.1, 7.2 sind in Reihe geschaltet, derart, daß der Ausgang des ersten Flip-Flops 7.1 mit dem Eingang des zweiten Flip-Flops 7.2 verbunden ist. Darüber hinaus werden beide Flip-Flops 7.1, 7.2 mit dem Bittakt BT versorgt. Zwei Eingänge des Exklusiv-Oder-Gatters 9 sind mit den Ausgängen der beiden Flip-Flops 7.1, 7.2 verbunden, wobei das Ausgangssignal des Exklusiv-Oder-Gatters 9 das Ausgangssignal IS der Impulserzeugungsschaltung 5 darstellt.

Der Impulserzeugungsschaltung 5 nachgeordnet ist ein Zähler 11, der über eine Anzahl N Zählerausgänge Q_{A..N} verfügt. Desweiteren verfügt der in Figur 1 dargestellte Zähler 11 über eine entsprechende Anzahl N Setzeingänge A bis N, mit deren Hilfe ein vorgebbarer Zählerwert einstellbar ist. Neben einem mit dem Bittakt BT versorgten Takteingang besitzt der Zähler 11 einen Freigabesignaleingang EN und einen Ladesignaleingang LD. Durch Anlegen eines Signals an den Eingang EN läßt sich das Zählen der Taktsignale des Bittakts BT unterbrechen, während ein Signal am Ladesignaleingang LD zu einer Übernahme an den Setzeingängen anliegender Signale auf die Ausgänge Q erlaubt. Im vorliegenden Ausführungsbeispiel sind die Setzeingänge B bis N mit Masse (Low-Signal) und der Setzeingang A mit 5 Volt (High-Signal) beaufschlagt. Damit läßt sich erreichen, daß beim Anlegen eines Ladesignals der Zähler 11 auf den Wert "1" zurückgesetzt wird.

Dem Zähler 11 nachgeordnet ist ein Pufferspeicher 13, dessen Speichereingänge mit den Zählerausgängen Q_{A} bis Q_{N} verbunden sind. Zusätzlich wird dem Pufferspeicher das Ausgangssignal Q₁ des ersten Flip-Flops 7.1 der Impulserzeugungsschaltung 5 als weiteres Eingangssignal zugeführt, sowie weitere Informationssignale, die als AIS (Alarm Indication Signal, Ausfall der Meßstrecke) und SLIP (Verlust des Zeichensynchronismus) bezeichnet sind. Desweiteren wird dem Pufferspeicher 13 von einer Uhr 15 das aktuelle Datum und die aktuelle Zeit zugeführt.

Als Steuereingänge weist der Pufferspeicher 13 einen Schreibeingang W und einen Leseeingang R auf. Im vorliegenden Ausführungsbeispiel ist der Schreibeingang W mit dem Ladesignaleingang LD des Zählers 11 verbunden.

Die Ausgänge des Pufferspeichers 13 sind mit einem nachgeordneten Parallel-Seriell-Wandler 17 verbunden, der die parallel vorliegenden Signale, das heißt den binären Zahlenwert in eine serielle Signalfolge umwandelt.

Ein dem Wandler 17 nachgeordneter Mikrocontroller 19 empfängt den seriellen Datenstrom und verarbeitet ihn derart, daß die gemessenen Daten mittels einer üblichen seriellen PC-Schnittstelle 21 zu einem normalen PC 23 übertragen und dort mittels entsprechender Software dargestellt und abgespeichert werden können.

Zusätzlich sorgt der Mikrocontroller 19 für eine Ansteuerung der Uhr 15 und eine Aktivierung des Leseeingangs R des Pufferspeichers 13.

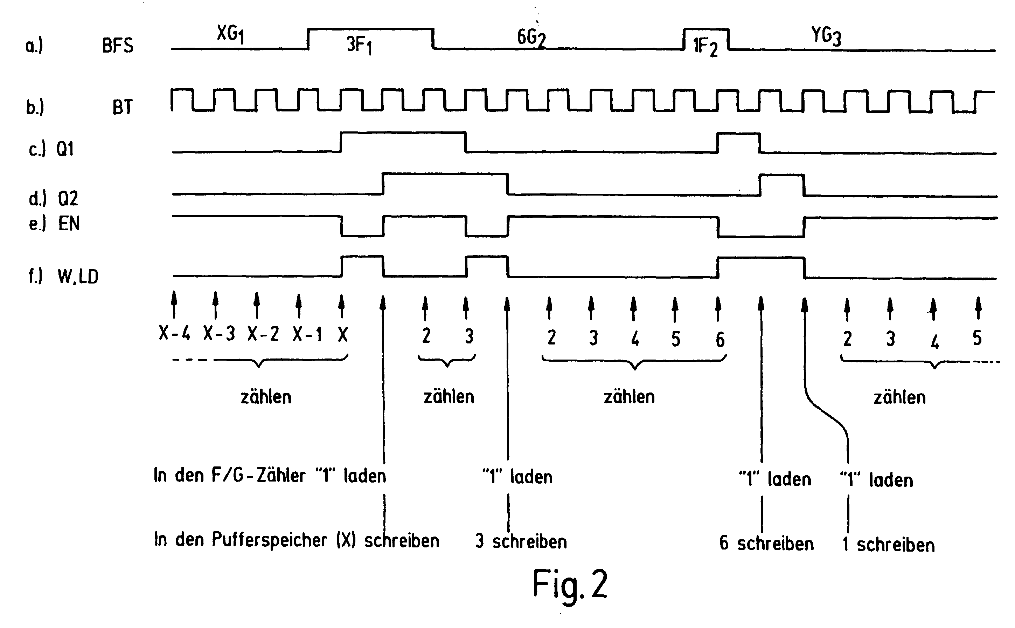

Die Funktionsweise dieser Bitfehlerstruktur-Erfassungsschaltung soll nun anhand der in Figur 2 dargestellten Signalverläufe a bis f erläutert werden. Dabei ist in Figur 2a das Bitfehler-Signal BFS der Vergleicherschaltung 3, in Figur 2b der Bittakt BT mit einer festen Taktfrequenz, in Figuren 2c und d die beiden Ausgangssignale Q₁, Q₂ der beiden Flip-Flops 7.1 und 7.2, in Figur 2e das Freigabesignal EN am Eingang des Zählers 11 und in Figur 2f das Ladesignal LD für den Zähler 11 und das Schreibsignal W für den Pufferspeicher 13 jeweils als Signalverlauf über der Zeit dargestellt.

Wie bereits erwähnt, dient das Bitfehlersignal BFS als Grundlage für die Bitfehlerstrukturerfassung. Im vorliegenden Beispiel ist anhand des Signalsverlaufs gemäß Figur 2a zu erkennen, daß der erste Wert G₁ für den Fehlerabstand zwischen dem zeitlich davorliegenden letzten Fehler und dem in der Figur 2a zu erkennenden ersten Fehler F₁ X beträgt; das heißt, daß eine Anzahl von X-Taktperioden zwischen den beiden Fehlern liegt. An diesen ersten bitfehlerfreien Zeitabschnitt G₁ schließt sich ein Zeitabschnitt an, innerhalb dem Bitfehler gemessen werden und der drei Taktperioden lang ist. Dieser Abschnitt ist mit 3F₁ gekennzeichnet. Daran schließt sich wiederum ein Zeitabschnitt 6G₂ an, innerhalb dem keine Bitfehler auftreten und der sechs Taktperioden lang ist. Dem schließt sich wiederum ein Zeitabschnitt 1F₂ an, innerhalb dem ein Bitfehler auftritt und der eine Taktperiode lang ist. Abschließend ist noch ein Zeitabschnitt YG₃ dargestellt, der bitfehlerfrei ist und eine Länge von Y-Taktperioden hat.

Dieses Bitfehlersignal BFS wird zusammen mit dem Bittakt BT gemäß Figur 2b der Impulserzeugungsschaltung 5 zugeführt. Das erste Flip-Flop 7.1 führt eine Synchronisation des Bitfehlersignals mit dem Bittakt durch, so daß die aufsteigende Flanke des Abschnitts 3F₁ mit der nächsten aufsteigenden Flanke des Bittakts synchronisiert wird. Gleiches gilt auch für die abfallende Flanke des Abschnitts 3F₁, die ebenfalls mit der nächsten aufsteigenden Flanke des Bittakts synchronisiert wird. Der sich daraus ergebende Signalverlauf ist in Figur 2c als Ausgangssignal Q₁ dargestellt.

Das zweite Flip-Flop 7.2, dem das Ausgangssignal Q₁ des ersten Flip-Flops 7.1 zugeführt ist, sorgt dafür, daß das Ausgangssignal Q₁ zeitverzögert als Ausgangssignal Q₂ ausgegeben wird. Aufgrund der Synchronisation des Signals Q₁ mit dem Bittakt ist das Ausgangssignal Q₂ genau um eine Taktperiode gegenüber Q₁ zeitverschoben.

Mittels einer Exklusiv-Oder Verknüpfung der beiden Ausgangssignale Q₁ und Q₂ läßt sich ein Signal erzielen, das bei jedem Signalwechsel, das heißt bei einer aufsteigenden und bei einer abfallenden Signalflanke, des Bitfehlers BFS einen Impuls der Länge einer Taktperiode erzeugt. Dies ist anhand des Signalverlaufs gemäß Figur 2f deutlich zu erkennen. Dieses Ausgangssignal des Exklusiv-Oder-Gatters 9 wird dem Eingang LD des Zählers 11 und dem Schreibeingang W des Puffers 13 direkt und über einen Invertierer dem Eingang EN des Zählers 11 indirekt zugeführt. Der invertierte Signalverlauf ist in Figur 2e dargestellt. Die an diesen beiden Eingängen EN und LD anliegenden Signale bewirken nun folgendes:

Zunächst sorgt das Signal am Eingang EN mit seinem High-Signal dafür, daß der Zähler 11 mit der Geschwindigkeit des Bittakts den an den Ausgängen Q_{A} bis Q_{N} abgreifbaren Zählerstand jeweils um 1 inkrementiert. Somit lassen sich die Zeitabschnitte G zählen. Mit der abfallenden Flanke des Signals EN wird dieser Zählvorgang unterbrochen, so daß in diesem Moment am Zählerausgang exakt der Wert der Zeitdauer des Abschnitts G vorliegt.

Die abfallende Flanke des Signals LD sorgt am Eingang W des Pufferspeichers 13 dafür, daß der aktuelle Zählerstand in den Pufferspeicher übernommen und dort zwischengespeichert wird und am Eingang LD des Zählers 11, daß der Zähler auf den über die Setzeingänge vorgegebenen Wert 1 zurückgesetzt wird. Gleichzeitig mit der abfallenden Flanke des Signals LD, das heißt mit der aufsteigenden Flanke des Signals EN wird die Unterbrechung aufgehoben, so daß der Zähler beginnend mit dem neuen Wert "1" mit der folgenden positiven Taktflanke wieder inkrementiert wird.

Der im Pufferspeicher 13 zwischengespeicherte Wert wird -gesteuert über den Mikrocontroller 19- dem Parallel-Seriell-Wandler 17 zugeführt, der die parallelen Daten in einen seriellen Datenstrom umsetzt. Der Mikrocontroller 19 selbst verarbeitet diese Signale und gibt sie über die Schnittstelle 21 zur Darstellung und Speicherung auf einen PC 23 weiter.

Der vorbeschriebene Ablauf wiederholt sich solange, bis die Messung beendet ist. Im Hinblick auf das vorliegende Ausführungsbeispiel ergibt sich damit eine vom Zähler 11 an den Pufferspeicher 13 übertragene Zahlenreihe von X, 3, 6, 1 und Y. Zusätzlich zu diesen Zahlenwerten wird dem Pufferspeicher das Ausgangssignal des Flip-Flops 7.1 zugeführt, so daß anhand dieses Wertes eine klare Zuordnung zwischen den gespeicherten Zählerständen und ihrer Bedeutung, also Fehlerlänge oder Fehlerabstand, möglich ist.

Zur Erhöhung der Auswertemöglichkeiten wird desweiteren das AIS-Signal sowie das SLIP-Signal zusammen mit einem Datum- und Zeitsignal dem Pufferspeicher zugeführt und dort zusammen mit dem Zählerstand des Zählers 11 zwischengespeichert.

Mit Hilfe der vorbeschriebenen Bitfehlerstruktur-Erfassungsschaltung 1 läßt sich mit einfachen Mitteln eine Bitfehlerstrukturerfassung durchführen, die mit Hilfe entsprechender Software sofort am PC darstellbar ist.

## Patentansprüche

1. Bitfehlerstruktur-Erfassungsschaltung zur Aufzeichnung des bitgenauen zeitlichen Auftretens von Übertragungsfehlern in einem binären Testsignal, insbesondere zur Aufzeichnung einer Bitfehler-Signalfolge (BFS), die anhand des Testsignals und eines gleichartigen Referenz-Signals mit einer Vergleicherschaltung (3) erzeugt worden ist, **gekennzeichnet durch**
eine Impulserzeugungsvorrichtung (5), der die Bitfehlersignalfolge (BFS) zugeführt ist und die bei jedem Signalwechsel einen Impuls (IS) erzeugt,
eine Zählvorrichtung (11), die abhängig von einem zugeführten Bittakt (BT) einen Zähler inkrementiert und bei Anliegen des Impulses (IS) der Impulserzeugungsvorrichtung (5) auf den Zählwert 1 zurücksetzt,
eine mit den Ausgängen der Zählvorrichtung (11) verbundene Puffervorrichtung (13), die bei Anliegen des Impulses (IS) den Zählerstand der Zählvorrichtung (11) zwischenspeichert, und
eine Auswertevorrichtung (17,19,23), der die zwischengespeicherten Zählerstände zugeführt sind.

2. Bitfehlerstruktur-Erfassungsschaltung nach Anspruch 1, **dadurch gekennzeichnet, daß** die Impulserzeugungsvorrichtung (5) zwei in Reihe geschaltete Flip-Flops (7.1,7.2) und ein Exklusiv-Oder-Gatter umfaßt, wobei die Ausgänge der Flip-Flops (7.1,7.2) mit zwei Eingängen des Exklusiv-Oder-Gatters (9) zur Erzeugung eines Impulses (IS) verbunden sind, und daß beiden Flip-Flops (7.1,7.2) der Bittakt (BT) als Taktsignal zugeführt ist.

3. Bitfehlerstruktur-Erfassungsschaltung nach Anspruch 2, **dadurch gekennzeichnet, daß** die Impulserzeugungsvorrichtung (5) einen weiteren Ausgang aufweist, an dem das Ausgangssignal des ersten Flip-Flops (7.1) abgreifbar ist.

4. Bitfehlerstruktur-Erfassungsschaltung nach einem der vorhergehenden Ansprüche, **dadurch gekennzeichnet, daß** die Zählvorrichtung (11) Setzeingänge (A bis N) aufweist, an denen der binäre Zählwert 1 anliegt, der mittels eines Steuersignals (LD) als aktueller Zählerstand übernehmbar ist.

5. Bitfehlerstruktur-Erfassungsschaltung nach einem der vorhergehenden Ansprüche, **dadurch gekennzeichnet, daß** die Puffervorrichtung (13) einen Steuereingang (W) aufweist, an dem ein Steuersignal zum Zwischenspeichern des Zählerstands anliegt.

6. Bitfehlerstruktur-Erfassungsschaltung nach einem der vorhergehenden Ansprüche, **dadurch gekennzeichnet, daß** der Puffervorrichtung (13) das Ausgangssignal (Q₁) des ersten Flip-Flops (7.1) und/oder Informationssignale, vorzugsweise AIS- und SLIP-Signale, zum Zwischenspeichern zuführbar sind.

7. Bitfehlerstruktur-Erfassungsschaltung nach einem der vorhergehenden Ansprüche, **dadurch gekennzeichnet, daß** die Ausgänge der Puffervorrichtung mit einer Parallel-Seriell-Wandlungsvorrichtung (17) verbunden sind, um das parallele Ausgangssignal zur Weiterverarbeitung umzusetzen.

8. Bitfehlerstruktur-Erfassungsschaltung nach einem der vorhergehenden Ansprüche, **dadurch gekennzeichnet, daß** die Auswertevorrichtung einen Mikrocontroller (19) umfaßt.

9. Bitfehlerstruktur-Erfassungsschaltung nach Anspruch 8, **dadurch gekennzeichnet, daß** der Mikrocontroller (19) eine die aktuelle Zeit/Datum liefernde Vorrichtung umfaßt, deren Ausgangssignal der Puffervorrichtung (13) als Informationssignal zuführbar ist.

10. Bitfehlerstruktur-Erfassungsschaltung nach einem der vorhergehenden Ansprüchen, **dadurch gekennzeichnet, daß** die Auswertevorrichtung eine Schnittstelle (21) zum Anschluß eines Computers (23) umfaßt.

11. Bitfehlerstruktur-Erfassungsschaltung nach einem der vorhergehenden Ansprüche, **dadurch gekennzeichnet, daß** die Auswertevorrichtung bei einem abzusehenden Pufferüberlauf auf eine Bitfehlerratenmessung umschaltet.

## Claims

1. Bit error structure acquisition circuit for recording the bit-accurate occurrence with respect to time of transmission errors in a binary test signal, in particular for recording a bit error signal sequence (BFS) generated by a comparator circuit (3) on the basis of the test signal and a reference signal of similar type, **characterized by**
a pulse generator device (5), said pulse generator device (5) being supplied with the bit error signal sequence (BFS) and generating a pulse (IS) at each change of signal;
a counter device (11), said counter device (11) incrementing a counter as a function of a supplied bit clock (BT) and resetting to the count value 1 when the pulse (IS) from the pulse generator device (5) is present;
a buffer device (13) connected to the outputs of the counter device (11), said buffer device storing the count status of the counter device (11) when the pulse (IS) is present; and
an evaluation device (17, 19, 23), said evaluation device (17, 19, 23) being supplied with the stored count statuses.

2. Bit error structure acquisition circuit according to claim 1, **characterized in that** the pulse generator device (5) comprises two series-connected flip-flops (7.1, 7.2) and an exclusive-OR gate, the outputs of the flip-flops (7.1, 7.2) being connected to two inputs of the exclusive-OR gate (9) to generate a pulse (IS), and **in that** both flip-flops (7.1, 7.2) are supplied with the bit clock (BT) as a clock signal.

3. Bit error structure acquisition circuit according to claim 2, **characterized in that** the pulse generator device (5) has an additional output at which the output signal of the first flip-flop (7.1) can be picked off.

4. Bit error structure acquisition circuit according to any one of the preceding claims, **characterized in that** the counter device (11) has set inputs (A through N) at which the binary count value 1 is present, which count value 1 can be accepted as the current count status by means of a control signal (LD).

5. Bit error structure acquisition circuit according to any one of the preceding claims, **characterized in that** the buffer device (13) has a control input (W) at which is present a control signal for storing the count status.

6. Bit error structure acquisition circuit according to any one of the preceding claims, **characterized in that** the buffer device (13) can be supplied with the output signal (Q₁) of the first flip-flop (7.1) and/or with information signals, preferably AIS and SLIP signals, for storing.

7. Bit error structure acquisition circuit according to any one of the preceding claims, **characterized in that** the outputs of the buffer device are connected to a parallel-to-serial converter (17) in order to convert the parallel output signal for further processing.

8. Bit error structure acquisition circuit according to any one of the preceding claims, **characterized in that** the evaluation device comprises a microcontroller (19).

9. Bit error structure acquisition circuit according to claim 8, **characterized in that** the microcontroller (19) comprises a device delivering the current time/date, the output signal of which device can be supplied to the buffer device (13) as an information signal.

10. Bit error structure acquisition circuit according to any one of the preceding claims, **characterized in that** the evaluation device comprises an interface (21) for connection to a computer (23).

11. Bit error structure acquisition circuit according to any one of the preceding claims, **characterized in that** the evaluation device switches over to bit error rate measurement in the event of a foreseeable buffer overflow.

## Revendications

1. Circuit de saisie de la structure des erreurs de bits destiné à saisir la survenance temporelle au bit près d'erreurs de transmission dans un signal de test binaire, notamment aux fins d'établissement d'une séquence de signaux d'erreurs de bits (BFS) générée avec un circuit de comparaison (3) à l'aide du signal de test et d'un signal de référence du même type, **caractérisé par**
un dispositif générateur d'impulsions (5), auquel la séquence de signaux d'erreurs de bits (BFS) est appliquée et qui génère à chaque changement de signal une impulsion (IS),
un dispositif de comptage (11), qui incrémente un compteur en fonction d'un rythme binaire généré (BT) et qui, à l'application de l'impulsion (IS) du dispositif générateur d'impulsions (5), se remet à la valeur 1,
un dispositif tampon (13) raccordé aux sorties du dispositif de comptage (11), qui met à chaque application de l'impulsion (IS) la valeur indiquée par le dispositif de comptage (11) en mémoire intermédiaire,
un dispositif d'évaluation (17, 19, 23) vers qui arrivent les valeurs comptées et mises en mémoire intermédiaire.

2. Circuit de saisie de la structure des erreurs de bits selon la revendication 1, **caractérisé en ce que**
le dispositif générateur d'impulsions (5) comprend deux circuits flip - flop sériels (7.1, 7.2) et une porte NON - OU exclusif, les sorties des circuits flip - flop (7.1, 7.2) étant raccordées à deux entrées de la porte NON - OU exclusif (9) pour générer une impulsion (IS), et
**en ce que** le rythme binaire (BT) est appliqué aux deux circuits flip - flop (7.1, 7.2) comme signal d'horloge.

3. Circuit de saisie de la structure des erreurs de bits selon la revendication 2, **caractérisé en ce que**
le dispositif générateur d'impulsions (5) dispose d'une sortie supplémentaire pour prélever le signal de sortie du premier circuit flip - flop (7.1).

4. Circuit de saisie de la structure des erreurs de bits selon l'une des revendications précédentes, **caractérisé en ce que**
le dispositif de comptage (11) dispose d'entrées d'activation (A à N), auxquelles est appliquée la valeur binaire 1, reprise à l'aide d'un signal de commande (LD) comme valeur actuelle sur le compteur.

5. Circuit de saisie de la structure des erreurs de bits selon l'une des revendications précédentes, **caractérisé en ce que**
le dispositif tampon (13) comprend une entrée de commande (W) à laquelle sera appliqué un signal de commande pour mettre en mémoire intermédiaire la valeur enregistrée par le dispositif de comptage.

6. Circuit de saisie de la structure des erreurs de bits selon l'une des revendications précédentes, **caractérisé en ce que**
le dispositif tampon (13) peut recevoir le signal de sortie (Q₁) du premier circuit flip - flop (7.1) et/ou des signaux d'information, de préférence des signaux AIS et SLIP, pour les mettre en mémoire intermédiaire.

7. Circuit de saisie de la structure des erreurs de bits selon l'une des revendications précédentes, **caractérisé en ce que**
les sorties du dispositif tampon sont raccordées à un convertisseur parallèle-sériel (17), afin de convertir le signal de sortie parallèle pour un traitement ultérieur.

8. Circuit de saisie de la structure des erreurs de bits selon l'une des revendications précédentes, **caractérisé en ce que**
le dispositif d'évaluation comprend une micro-commande (19).

9. Circuit de saisie de la structure des erreurs de bits selon la revendication 8, **caractérisé en ce que**
la micro-commande (19) comprend un dispositif indiquant l'heure et la date actuelles, dont le signal de sortie peut être amené au dispositif tampon (13) comme signal d'information.

10. Circuit de saisie de la structure des erreurs de bits selon l'une des revendications précédentes, **caractérisé en ce que**
le dispositif d'évaluation comprend une interface (21) pour raccorder un ordinateur (23).

11. Circuit de saisie de la structure des erreurs de bits selon l'une des revendications précédentes, **caractérisé en ce que**
le dispositif d'évaluation bascule en cas de surcharge prévisible du dispositif tampon sur une mesure de taux d'erreurs de bits.
